# EUROPEAN PATENT APPLICATION

(11) **EP 4 745 994 A1**
(43) Date of publication of application: **20.05.2026**
(21) Application number: 25215681.5
(22) Date of filing: 13.11.2025
(51) Int. Cl.: G21D 1/00

(54) **DISMANTLING METHOD FOR METAL EQUIPMENTS OF HEAT TRANSPORT SYSTEM IN CONTAINMENT BUILDING AT NUCLEAR POWER PLANT**

(30) Priority: 18.11.2024 KR 20240164374
(71) Applicant: Doosan Enerbility Co., Ltd., Seongsan-gu Changwon-si, Gyeongsangnam-do 51711 (KR)
(72) Inventor: Park, Kwang Soo, 02225 Seoul (KR); Kim, Chang Kyu, 51471 Changwon-si, Gyeongsangnam-do (KR); Kim, Hae Woong, 51319 Changwon-si, Gyeongsangnam-do (KR); Pak, Dong Hun, 44617 Ulsan (KR); Lim, Chung Sik, 51431 Changwon-si, Gyeongsangnam-do (KR); Lim, Tae Seob, 06912 Seoul (KR)
(74) Representative: BCKIP Part mbB

(57) **Abstract**

Disclosed is a method for dismantling metal equipment of a heat transport system in a containment building at a nuclear power plant, the metal equipment including a heat transport pump, a steam generator, a pressurizer, a condenser, and a D2O tank, including: a first dismantling step of dismantling the heat transport pump; a second dismantling step of dismantling the steam generator after the first dismantling step; a third dismantling step of dismantling the pressurizer after the second dismantling step; and a fourth dismantling step of dismantling the condenser and the D2O tank after the third dismantling step.

## Description

The present application claims priority to Korea Patent Application No. 10-2024-0164374, filed November 18, 2024.

### FIELD

The present disclosure relates to a dismantling method for metal equipment of a heat transport system in a containment building at a nuclear power plant, more particularly, to a dismantling method for metal equipment of a heat transport system in a containment building at a nuclear power plant, which is economically beneficial and capable of minimizing exposure to radiation of a worker by providing a dismantling order of the metal equipment in relation to workability during the dismantling work and a degree of contamination per metal equipment.

### BACKGROUND

Examples of the metal equipment of a heat transport system in the containment building at the nuclear power plant are a steam generator, a heat transport pump, a pressurizer, a condenser, and a D2O tank, etc. The degree of contamination of the metal equipment varies depending on the equipment type because settling velocity of crud, which is a radioactive corrosion product, differs according to the temperature and flowing velocity of the coolant. Accordingly, because the degree of contamination differs among the equipment, the dismantling of certain metal equipment that contributes to the overall spatial dose rate in the containment building directly affects the radiation exposure of workers.

Therefore, there is a need for a method for dismantling the metal equipment of a heat transport system in a containment building at a nuclear power plant that is capable of minimizing the radiation exposure of workers.

### SUMMARY

An object of the present disclosure is to provide a method for dismantling the metal equipment of a heat transport system in a containment building at a nuclear power plant which is economically beneficial and capable of minimizing radiation exposure of workers by providing an order of the dismantling the metal equipment in relation to workability during the dismantling work and a degree of contamination per metal equipment.

The technical problem to be achieved by the present disclosure is not limited to the above-mentioned technical problem, and other technical problems that are not mentioned will be clearly understood by ordinary-skilled persons in the art to which the present disclosure pertains from the following description.

The overall spatial dose ratio inside the containment building at a nuclear power plant is varied according to which metal equipment is dismantled first, and this influences a degree of exposure to radiation of workers. In addition, the dismantling order influences constraints related to the dismantling work, and therefore, an object of the present disclosure is to solve the problem by providing an order of dismantling the metal equipment of the heat transport system in the containment building which is capable of minimizing exposure to radiation of workers in relation to constraints related to the dismantling work.

One embodiment is a method for dismantling metal equipment of a heat transport system in a containment building at a nuclear power plant, the metal equipment including a heat transport pump, a steam generator, a pressurizer, a condenser, and a D2O tank, including: a first dismantling step of dismantling the heat transport pump; a second dismantling step of dismantling the steam generator after the first dismantling step; a third dismantling step of dismantling the pressurizer after the second dismantling step; and a fourth dismantling step of dismantling the condenser and the D2O tank after the third dismantling step.

According to an embodiment, a degree of radioactive contamination may be lowered in an order of the heat transport pump, the steam generator, the condenser, the pressurizer, and the D2O tank.

According to an embodiment, in the first dismantling step, the heat transport pump may be lifted by a crane and be removed from the containment building.

According to an embodiment, before the second dismantling step, a first installing step in which a cutting apparatus and a lifting apparatus are installed may be performed.

According to an embodiment, the heat transport pump may be disposed in a plurality at a center portion of the containment building, and after the first dismantling step, the cutting apparatus and the lifting apparatus may be installed in a space in which the plurality of heat transport pumps were previously disposed.

According to an embodiment, both the second dismantling step and the third dismantling step may be performed by using the cutting apparatus and the lifting apparatus.

According to an embodiment, in the second dismantling step, the steam generator may be cut into an upper portion and a lower portion by the cutting apparatus, and then, the upper portion and the lower portion may be lifted by the lifting apparatus to be removed from the containment building.

According to an embodiment, in the third dismantling step, the pressurizer may be cut into an upper portion and a lower portion by the cutting apparatus, and then, the upper portion and the lower portion may be lifted by the lifting apparatus to be removed from the containment building.

According to an embodiment, two steam generators may be provided on one side and two steam generators may be provided on an opposite side with the cutting apparatus and the lifting apparatus interposed therebetween in the containment building, and the two steam generators provided on the one side may be dismantled first, and then, the two steam generators provided on the opposite side may be dismantled.

According to an embodiment, each of the condenser and the D2O tank may be surrounded by a concrete structure and may be disposed adjacent to each other.

According to an embodiment, before the fourth dismantling step, a second installing step in which a scaffold and a concrete cutting apparatus are installed adjacent to the condenser and the D2O tank may be performed.

According to an embodiment, in the fourth dismantling step, each of the concrete structures surrounding the condenser and the D2O tank may be cut by using the concrete cutting apparatus, the condenser may be dismantled and then, the D2O tank may be dismantled.

According to the present disclosure, metal equipment of a heat transport system within a containment building of a nuclear power plant can be dismantled in a manner that is both economically efficient and minimizes radiation exposure of workers. In particular, dismantling is performed in a sequential order of the heat transport pump, the steam generator, the pressurizer, the condenser, and the D2O tank.

In more detail, the heat transport pump which has the highest degree of radioactive contamination is dismantled first, and then, the overall spatial does ratio inside the containment building can be dramatically lowered, and a space in which the cutting apparatus and the lifting apparatus are installed can be secured. Thereafter, the cutting apparatus and the lifting apparatus can be used in common when performing the dismantling work of the steam generator and the pressurizer, so it is economically beneficial because the workability is excellent. In addition, thereafter, it is possible to dismantle the condenser and the D2O tank in parallel, each of which are surrounded by the concrete structure, by installing a scaffold and a concrete cutting apparatus, and this manner of dismantling is economically beneficial due to excellent workability.

The effects of the present disclosure are not limited to the above-described effects and other effects which are not described herein may be derived by those skilled in the art from the following description of the embodiments of the present disclosure.

### BRIEF DESCRIPTION OF THE DRAWINGS

FIG. 1 is a view schematically illustrating an inside of a containment building at a nuclear power plant.
FIG. 2 is a schematic diagram illustrating a method for dismantling metal equipment of a heat transport system in a containment building at a nuclear power plant according to an embodiment of the present disclosure.
FIG. 3 is a view schematically illustrating an inside of a containment building at a nuclear power plant before a first dismantling step.
FIG. 4 is a view schematically illustrating an inside of a containment building at a nuclear power plant before a second dismantling step after a first dismantling step.
FIG. 5 is a view schematically illustrating an inside of a containment building at a nuclear power plant before a third dismantling step after a second dismantling step.
FIG. 6 is a view schematically illustrating an inside of a containment building at a nuclear power plant before a fourth dismantling step after a third dismantling step.

### DETAILED DESCRIPTION

Hereinafter, a preferred embodiment with respect to a dismantling method for metal equipment of a heat transport system in a containment building at a nuclear power plant according to the present disclosure will be described with reference to the accompanying drawings.

Further, terms described below are defined in consideration of the functions of one or more exemplary embodiments, and may have different meanings according to the intention of a user or operator or the convention. Furthermore, the exemplary embodiments described below are not intended to limit the scope of the present disclosure but merely to exemplify configurational elements defined in the claims.

In order to clearly illustrate the present invention, parts not related to the description are omitted, and similar parts are denoted by like reference characters throughout the specification. Throughout the specification, when a certain portion "includes" or "comprises" a certain component, this indicates that other components are not excluded and may be further included unless otherwise noted.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

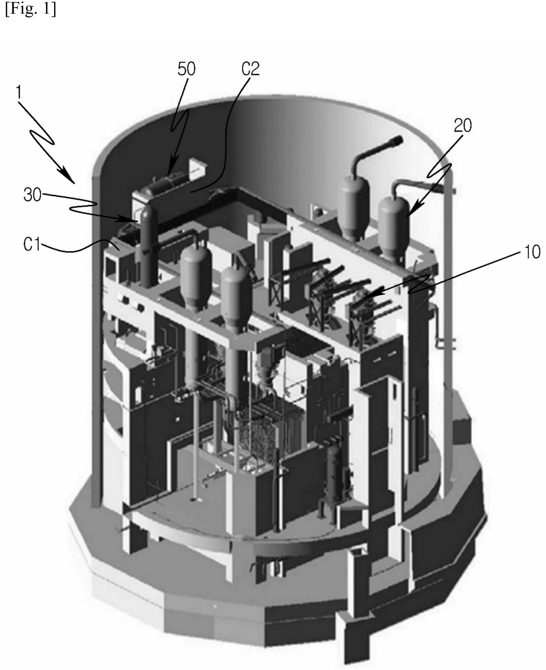

First, an inside of the containment building 1 at a nuclear power plant will be described schematically with reference to FIGS. 1 and 3-6.

On the inside of the containment building 1, as metal equipment of a heat transport system, a heat transport pump 10, a steam generator 20, a pressurizer 30, a condenser 40, and a D2O tank may be provided.

In FIG. 1, a plurality of heat transport pumps 10 are disposed at a center portion of the containment building 1. Among these, two heat transport pumps 10 may be disposed on one side, and two heat transport pumps 10 may be disposed on the opposite side so as to face each other. In addition, a plurality of steam generators 20 may be disposed generally on a radially outer side than the heat transport pumps 10, with two steam generators 20 on one side and two steam generators 20 on the opposite side, also arranged to face each other.

Each of the pressurizer 30, the condenser 40, and the D2O tank 50 are provided in a single unit. In particular, the condenser 40 is surrounded by a concrete structure C1, and the D2O tank 50 is surrounded by a concrete structure C2 connected to an inner wall of the containment building 1. Because of this, in FIG. 1, only the concrete structure C1 surrounding the condenser 40 is illustrated, and the condenser 40 itself is not depicted.

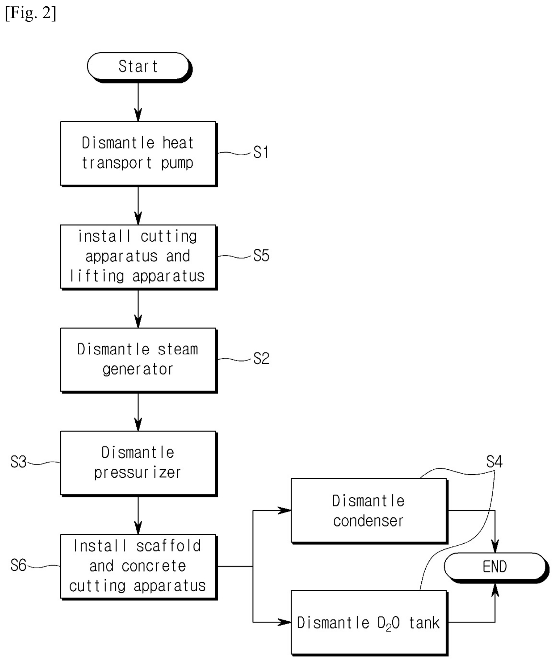

Hereinafter, with reference to FIGS. 2 to 6, the method for dismantling the metal equipment of the heat transport system in the containment building at a nuclear power plant according to an embodiment of the present disclosure will be described in more detail.

The dismantling method of the present disclosure includes a first dismantling step S1 of dismantling the heat transport pump 10, a second dismantling step S2 of dismantling the steam generator 20 after the first dismantling step S1, a third dismantling step S3 of dismantling the pressurizer 30 after the second dismantling step S2, and a fourth dismantling step S4 of dismantling the condenser 40 and the D2O tank 50 after the third dismantling step S3. This dismantling order is derived based on both the workability during the dismantling operations and the degree of radioactive contamination associated with each piece of metal equipment, as will be described in more detail below.

The degree of radioactive contamination of the metal equipment varies according to the temperature and flowing velocity of the coolant. Specifically, the settling velocity of crud, which is a radioactive corrosion product, increases as the temperature and flowing velocity of the coolant decreases.

In particular, magnetite (Fe₃O₄) is generated in a feeder tube of internal pipes of the metal equipment of the heavy-water reactor heat transport system, which is typically made of carbon steel. The magnetite is transported by the heavy water and then deposited within the pipes. Since the solubility of magnetite is proportional to the temperature of the heavy water, a greater amount of radioactive materials tends to deposited in the pipes of the metal equipment operating at a lower temperature. Accordingly, the degree of radioactive contamination can be inferred by comparing the temperature of the heavy water flowing through the pipes of the respective metal equipment.

In view of the above, the degree of radioactive contamination decreases in the order of the heat transport pump 10, the steam generator 20, the condenser 40, the pressurizer 30, and the D2O tank 50. Accordingly, worker radiation exposure can be minimized because the overall spatial dose rate within the containment building 1 is significantly reduced each time the heat transport pump 10, the steam generator 20, the condenser 40, the pressurizer 30, and the D2O tank 50 are dismantled in this sequential order.

However, the steam generator 20 and the pressurizer 30 are large-scale pieces of metal equipment, and therefore, cannot be handled by an existing crane installed in the containment building 1. Accordingly, a dedicated handling is required for dismantling these components. Once such a device is installed, it is preferable that the steam generator 20 and the pressurizer 30 be dismantled sequentially so that the same handling device can be used for both.

In addition, as each of the condenser 40 and the D2O tank 50 is surrounded by the concrete structures C1 and C2 respectively as described above, concrete cutting is needed in order to dismantle the condenser 40 and the D2O tank 50. Therefore, it is preferable that the condenser 40 and the D2O tank 50 are dismantled either sequentially or in parallel.

According to an embodiment, as illustrated in FIG. 1, the steam generator 20 and the pressurizer 30 may be installed adjacent to each other, and the condenser 40 and the D2O tank 50 may also be disposed adjacent to each other.

Therefore, according to the present disclosure, the dismantling order of the metal equipment of the heat transport system, which is the heat transport pump 10, the steam generator 20, the pressurizer 30, and then the condenser 40 and the D2O tank 50, has been identified as the most efficient and advantageous.

In the first dismantling step S1, the heat transport pump 10 may be removed from the containment building 1 by lifting it by a crane. The heat transport pump 10 may be dismantled by using the existing crane installed in the containment building 1 because the heat transport pump 10 is positioned lower than the crane, and is not so large as to require cutting.

As described above, by dismantling the heat transport pump 10 first, has the highest degree of radioactive contamination, the overall spatial dose rate in the containment building 1 can be significantly reduced. In addition, since a plurality of heat transport pumps 10 are disposed at the center portion of the containment building 1, dismantling them first makes it possible to secure sufficient space for installing the dedicated device required for dismantling the steam generator 20 and the pressurizer 30.

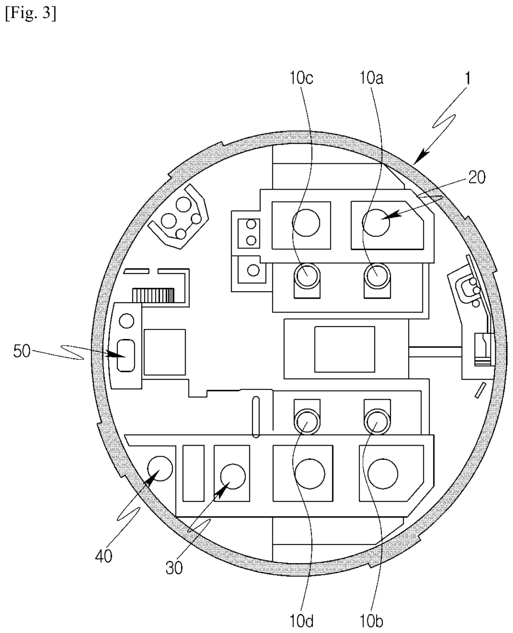

In FIG. 3, the inside of the containment building 1 at the nuclear power plant before the first dismantling step S1 is illustrated schematically. At this instance, the order in which the four heat transport pumps 10 are dismantled may be changed variously as needed, however, as an example, as illustrated in FIG. 3, the four heat transport pumps 10 may be dismantled in an order of a first heat transport pump 10a, a second heat transport pump 10b, a third heat transport pump 10c, and a fourth heat transport pump 10d. As such, by dismantling the first heat transport pump 10a first, a space previously occupied by the first heat transport pump 10a can be utilized as a workspace.

Then, the first installing step S5 to install the dedicated devices for dismantling the steam generator 20 and the pressurizer 30 is performed. The first installing step S5, in which the cutting apparatus and the lifting apparatus are installed as the dedicated device for handling the steam generator 20 and the pressurizer 30, is performed before the second dismantling step S2. In the present embodiment, the first installing step S5 is performed between the first dismantling step S1 and the second dismantling step S2 as illustrated in FIG. 2.

The cutting apparatus can be any machine or tool operated by power that cuts an object into two or more pieces. The cutting apparatus can be any type of saw, as an example. The lifting apparatus can be any machine or a tool operated by power that picks up a target object and lifts it higher. The lifting apparatus can be any type of crane, as an example.

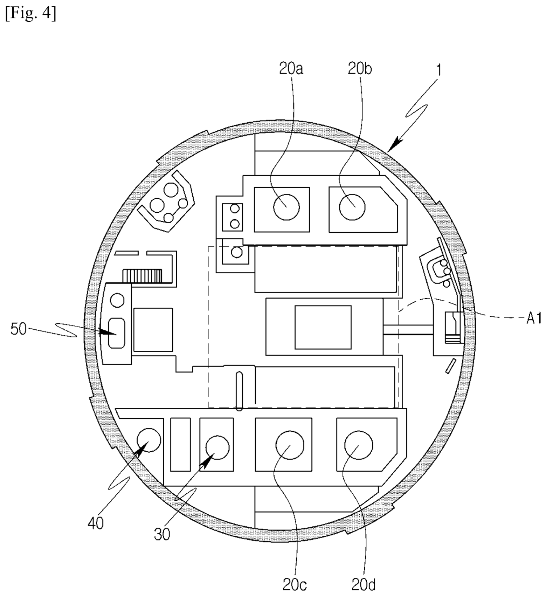

In FIG. 4, the inside of the containment building 1 at a nuclear power plant before the second dismantling step S2, after completion of the first dismantling step S1, is schematically illustrated. As four heat transport pumps 10 have been dismantled in the first dismantling step S1, a workspace A1 is prepared at the center portion of the containment building 1. Because of this, in a space in which the plurality of heat transport pumps 10 were previously installed, the cutting apparatus and the lifting apparatus for the steam generator 20 and the pressurizer 30 can be installed after the first dismantling step S1.

Afte that, both the second dismantling step S2 and the third dismantling step S3 can be performed by using the cutting apparatus and the lifting apparatus.

In more detail, in the second dismantling step S2, the steam generator 20 may be cut into an upper portion and a lower portion by the cutting apparatus, and then, each of the upper portion and the lower portion may be lifted by the lifting apparatus and removed from the containment building 1. Korea Patent No. 10-2024-0009241 is incorporated by reference in its entirety. Korea Patent No. 10-2024-0009241 describes a procedure of cutting and removing the steam generator 20 from the containment building 1 by using the cutting apparatus and the lifting apparatus.

At this instance, the order in which the four heat generators 20 are dismantled may be changed variously as needed, however, as an example, the four heat generators 20 may be dismantled in an order of a first steam generator 20a, a second steam generator 20b, a third steam generator 20c, and a fourth steam generator 20d as illustrated in FIG. 4. That is, with the cutting apparatus and the lifting apparatus interposed between one side and another side, the first and second steam generators 20a and 20b provided on the one side are dismantled first, and then, the third and fourth steam generators 20c and 20d provided on the opposite side are dismantled. As such, the process may be simplified in terms of utilization of the apparatus and the space, by dismantling the first steam generator first and then, dismantling the second steam generator 20b which is immediately adjacent thereto.

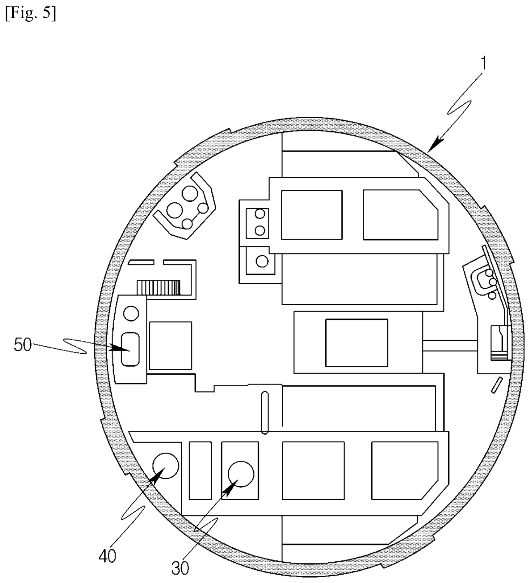

In FIG. 5, the inside of the containment building 1 at a nuclear power plant before the third dismantling step S3, after completion of the second dismantling step S2, is illustrated schematically.

Similarly, in the third dismantling step S3, the pressurizer 30 is cut into an upper portion and a lower portion by the cutting apparatus, and the upper portion and the lower portion are then lifted by the lifting apparatus and removed from the containment building 1. Korea Patent No. 2024-0048885 is incorporated by reference in its entirety. Korea Patent No. 2024-0048885 describes a procedure of cutting and taking the pressurizer 30 out of the containment building 1 by using the cutting apparatus and the lifting apparatus.

At this instance, various manners of cutting may be applied, such as using a wire saw, cutting in combination with laser cutting, and the like. In addition, in the second dismantling step S2, the same or different manner of cutting may be used in the cutting of the steam generator 20 in the second dismantling step S2 and the cutting of the pressurizer 30 in the third dismantling step S3, however, another manner of cutting may be used as needed.

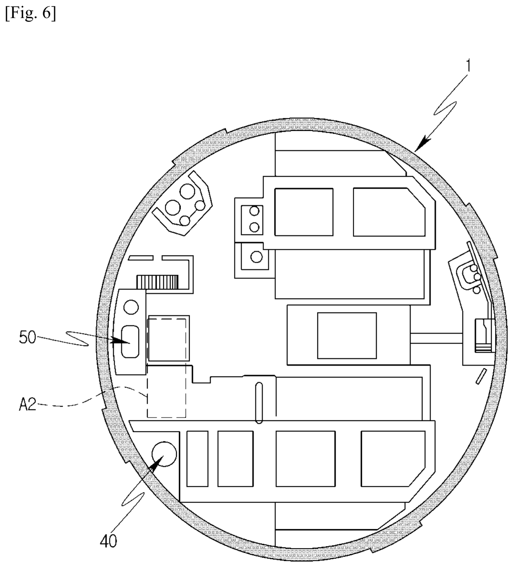

In FIG. 6, the inside of the containment building 1 at a nuclear power plant before the fourth dismantling step S4 after completion of the third dismantling step S3, is illustrated schematically.

As described above, it is preferable that the condenser 40 and the D2O tank 50 are dismantled simultaneously or through a parallel work after dismantling the heat transport pump 10, the steam generator 20, and the pressurizer 30. In the case of the condenser 40 and the D2O tank 50, because they are surrounded by the concrete structures C1 and C2, removal of the concrete wall is required. Performing such removal of the concrete structures C1 and C2 through a parallel work for dismantling the condenser 40 and the D2O tank 50 is economically advantageous.

To this end, before the fourth dismantling step S4, the second installing step S6 is performed, in which a scaffold and a concrete cutting apparatus are installed adjacent to the condenser 40 and the D2O tank 50. In the present embodiment, the second installing step S6 is performed between the third dismantling step S3 and the fourth dismantling step S4 as illustrated in FIG. 2. In FIG. 6, an area A2 in which the scaffold and the concrete cutting apparatus are installed adjacent to the condenser 40 and the D2O tank 50 is illustrated.

According to an embodiment, in the fourth dismantling step S4, each of the concrete structures C1 and C2 surrounding the condenser 40 and the D2O tank 50 may be cut by using the concrete cutting apparatus, and the condenser 40, which has a relatively higher degree of radioactive contamination is dismantled first, and then, the D2O tank 50 is dismantled. When cutting the concrete, various methods may be applied, such as wire saw cutting and the like.

According to an embodiment, the condenser 40 and the D2O tank 50 are installed in positions higher than the existing crane installed previously in the containment building 1, and thus, it is hard to use the existing crane. Accordingly, the condenser 40 and the D2O tank 50 may be removed from the containment building 1 by means of an additional dedicated device for handling them.

The present disclosure is not limited to the above-described specific embodiments and descriptions, and various modifications may be made by those skilled in the art without departing from the gist of the present disclosure claimed in the claims. Such variations are within the protection scope of the present disclosure.

### REFERENCE NUMERALS

1: containment building
10: heat transport pump
20: steam generator
30: pressurizer
40: condenser
50: D2O tank

## Claims

1. A method for dismantling metal equipment of a heat transport system in a containment building at a nuclear power plant, the metal equipment comprising a heat transport pump, a steam generator, a pressurizer, a condenser, and a D2O tank, comprising:
a first dismantling step of dismantling the heat transport pump;
a second dismantling step of dismantling the steam generator after the first dismantling step;
a third dismantling step of dismantling the pressurizer after the second dismantling step; and
a fourth dismantling step of dismantling the condenser and the D2O tank after the third dismantling step.

2. The method for dismantling metal equipment of a heat transport system in a containment building at a nuclear power plant of claim 1,
wherein a degree of radioactive contamination is lowered in an order of the heat transport pump, the steam generator, the condenser, the pressurizer, and the D2O tank.

3. The method for dismantling metal equipment of a heat transport system in a containment building at a nuclear power plant of claim 1,
wherein in the first dismantling step, the heat transport pump is lifted by a crane and is removed from the containment building.

4. The method for dismantling metal equipment of a heat transport system in a containment building at a nuclear power plant of claim 1,
wherein before the second dismantling step, a first installing step in which a cutting apparatus and a lifting apparatus are installed is performed.

5. The method for dismantling metal equipment of a heat transport system in a containment building at a nuclear power plant of claim 4,
wherein the heat transport pump is disposed in a plurality at a center portion of the containment building, and after the first dismantling step, the cutting apparatus and the lifting apparatus are installed in a space in which the plurality of heat transport pumps were previously disposed.

6. The method for dismantling metal equipment of a heat transport system in a containment building at a nuclear power plant of claim 4,
wherein both the second dismantling step and the third dismantling step are performed by using the cutting apparatus and the lifting apparatus.

7. The method for dismantling metal equipment of a heat transport system in a containment building at a nuclear power plant of claim 6,
wherein in the second dismantling step, the steam generator is cut into an upper portion and a lower portion by the cutting apparatus, and then, the upper portion and the lower portion are lifted by the lifting apparatus to be removed from the containment building.

8. The method for dismantling metal equipment of a heat transport system in a containment building at a nuclear power plant of claim 6,
wherein in the third dismantling step, the pressurizer is cut into an upper portion and a lower portion by the cutting apparatus, and then, the upper portion and the lower portion are lifted by the lifting apparatus to be removed from the containment building.

9. The method for dismantling metal equipment of a heat transport system in a containment building at a nuclear power plant of claim 7,
wherein two steam generators are provided on one side and two steam generators are provided on an opposite side with the cutting apparatus and the lifting apparatus interposed therebetween in the containment building, and the two steam generators provided on the one side are dismantled first, and then, the two steam generators provided on the opposite side are dismantled.

10. The method for dismantling metal equipment of a heat transport system in a containment building at a nuclear power plant of claim 1,
wherein each of the condenser and the D2O tank are surrounded by a concrete structure and are disposed adjacent to each other.

11. The method for dismantling metal equipment of a heat transport system in a containment building at a nuclear power plant of claim 10,
wherein before the fourth dismantling step, a second installing step in which a scaffold and a concrete cutting apparatus are installed adjacent to the condenser and the D2O tank is performed.

12. The method for dismantling metal equipment of a heat transport system in a containment building at a nuclear power plant of claim 11,
wherein in the fourth dismantling step, each of the concrete structures surrounding the condenser and the D2O tank is cut by using the concrete cutting apparatus, the condenser is dismantled and then, the D2O tank is dismantled.
